# EUROPEAN PATENT APPLICATION

(11) **EP 4 436 240 A1**
(43) Date of publication of application: **25.09.2024**
(21) Application number: 22906325.0
(22) Date of filing: 06.12.2022
(51) Int. Cl.: H04W 24/02

(54) **COMMUNICATION METHOD AND APPARATUS**

(30) Priority: 13.12.2021 CN 202111522756
(71) Applicant: Huawei Technologies Co., Ltd., Shenzhen, Guangdong 518129 (CN)
(72) Inventor: HU, Xingxing, Shenzhen, Guangdong 518129 (CN); WANG, Rui, Shenzhen, Guangdong 518129 (CN)
(74) Representative: Maiwald GmbH
(86) International application number: PCT/CN2022/136873
(87) International publication number: WO 2023/109575

(57) **Abstract**

According to a method and an apparatus in embodiments, in a redirection scenario, a target network device receives, from a terminal device, a first measurement result obtained in a source cell, and configures carrier aggregation CA and/or dual connectivity DC for the terminal device based on the first measurement result. In this way, a network side obtains a measurement result in advance, which reduces a latency between configuring, by a network side device, a measurement configuration for a terminal device after redirection and receiving a measurement result from the terminal device, so that the network side can configure proper CA and/or MR-DC for the terminal device earlier.

## Description

This application claims priority to Chinese Patent Application No. 202111522756.9, filed with the China National Intellectual Property Administration on December 13, 2021 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a wireless network, a network side may configure a plurality of frequencies (carriers) or cells for one terminal device, so that a communication service can be provided for the terminal device by using resources of the plurality of frequencies (carriers) or cells, thereby providing high-rate transmission for the terminal device.

The plurality of frequencies or cells may belong to different base stations, that is, one terminal device may communicate with a plurality of base stations. This is referred to as dual connectivity (dual connectivity, DC), or MR-DC (Multi-Radio dual connectivity). The plurality of base stations may be base stations that belong to a same radio access technology (radio access technology, RAT) (for example, all are 4G base stations or 5G base stations), or may be base stations using different RATs (for example, one is a 4th-generation 4G base station, and another is a 5th-generation 5G base station). The plurality of frequencies or cells may belong to a same base station. This is referred to as carrier aggregation (Carrier Aggregation, CA). Alternatively, the network side may configure both MR-DC and CA for the terminal device, that is, different base stations form MR-DC, and different cells in a same base station form CA.

Generally, after the terminal device accesses the network, the network side delivers a measurement configuration to the terminal device, and then the terminal device reports a measurement result. Based on the measurement result reported by the terminal device, the network side configures CA or MR-DC for the terminal, that is, selects a proper cell to form CA or MR-DC. The network side further configures measurement (for measuring a neighboring cell of a current serving cell) for the terminal after the terminal device accesses the network, and then the terminal device reports the measurement result so that the network side configures CA or MR-DC for the terminal based on the measurement result. The entire process is time-consuming. How to reduce a CA or MR-DC configuration latency becomes an urgent problem to be resolved.

### SUMMARY

Embodiments of this application provide a communication method and apparatus, so that proper CA and/or MR-DC can be configured for a terminal device earlier, to improve user experience.

Embodiments of this application may be specifically implemented by using the following technical solutions.

According to a first aspect, a communication method is provided. It may be understood that the method in the first aspect may be performed by a first apparatus, and the first apparatus may be a first network device or a communication apparatus that can support the first network device in implementing a function required for the method, for example, a chip, a circuit, or a chip system. For example, the first network device implements the method. The method may include: The first network device receives a first measurement result from a terminal device. The first measurement result includes a measurement result of at least one cell obtained in a serving cell (a source cell) in which the terminal device is located when the terminal device receives redirection information, and the first network device is a network device to which a second cell accessed by the terminal device after the terminal device receives the redirection information belongs. The first network device configures carrier aggregation CA and/or dual connectivity DC for the terminal device based on the first measurement result.

According to the method in this embodiment of this application, a latency between configuring, by a network side device, a measurement configuration for a terminal device after redirection and receiving a measurement result from the terminal device can be reduced, so that the network side can configure proper CA and/or MR-DC for the terminal device earlier, thereby improving user experience.

In some possible implementations, when the first measurement result includes a measurement result of a first neighboring cell and the terminal device supports CA and/or DC between the second cell and the first neighboring cell, the configuring CA and/or DC for the terminal device based on the first measurement result may be that the first network device configures the first neighboring cell of the second cell as a secondary cell.

According to a second aspect, a communication method is further provided. It may be understood that the method in the second aspect may be performed by a second apparatus, and the second apparatus may be a second network device or a communication apparatus that can support the second network device in implementing a function required for the method, for example, a chip, a circuit, or a chip system. For example, the second network device implements the method. The method may include: The second network device generates a first message including redirection information, to indicate to redirect a terminal device to a cell of a first frequency, and trigger the terminal device to send a first measurement result. The first measurement result includes a measurement result of at least one cell obtained by the terminal device in a first cell, and the first cell is a serving cell (a source cell) in which the terminal device is located when the terminal device receives the redirection information. The second network device sends the first message to the terminal device. Optionally, the first measurement result is used to configure CA and/or DC for the terminal device.

According to a third aspect, a communication method is further provided. The method in the third aspect may be performed by a third apparatus, and the third apparatus may be a terminal device or a communication apparatus that can support the terminal device in implementing a function required for the method, for example, a chip, a circuit, or a chip system. The method may include: generating a first measurement result, where the first measurement result includes a measurement result of at least one cell obtained by the terminal device in a first cell, and the first cell is a serving cell (a source cell) in which the terminal device is located when the terminal device receives redirection information; and sending the obtained first measurement result to a first network device, where the first network device is a network device to which a second cell (a target cell) accessed by the terminal device after the terminal device receives the redirection information belongs, and the first cell belongs to a second network device (a source network device). Optionally, the first measurement result is used to configure CA and/or DC for the terminal device.

According to the method in the first aspect to the third aspect, a latency between configuring, by a network side device, a measurement configuration for a terminal device after redirection and receiving a measurement result from the terminal device can be reduced, so that the network side can configure proper CA and/or MR-DC for the terminal device earlier, thereby improving user experience.

With reference to any one of the first aspect to the third aspect, in some possible implementations, the first measurement result includes at least one of the following: cell signal quality of each cell of the at least one cell, beam signal quality of each cell, and cell identification information of the at least one cell.

With reference to any one of the first aspect to the third aspect, in some possible implementations, when the terminal device supports CA/DC between the target cell and the first neighboring cell, the first neighboring cell is configured as a secondary cell for CA/DC of the terminal device.

With reference to any one of the first aspect to the third aspect, in some possible implementations, the first measurement result is a measurement result obtained by the terminal device in a cell reselection and/or cell selection process.

With reference to the second aspect or the third aspect, in some possible implementations, first indication information in the first message indicates the terminal device to send the first measurement result to the cell that is to be accessed by the terminal device based on the redirection information, or the first indication information indicates the terminal device to send an identifier of the first cell to the cell that is to be accessed by the terminal device based on the redirection information, or the first indication information indicates the terminal device to store the first measurement result.

With reference to the second aspect or the third aspect, in some possible implementations, the first message may further include second indication information indicating that the first measurement result needs to include a measurement result of a cell of a second frequency and/or a first standard, so that signaling overheads between the terminal device and the target network device can be reduced.

With reference to the second aspect or the third aspect, in some possible implementations, the first message may further include third indication information indicating the terminal device to send a first measurement result that meets a preset condition, so that signaling overheads between the terminal device and the target network device can be reduced.

With reference to the second aspect or the third aspect, in some possible implementations, the terminal device may further receive fourth indication information indicating the terminal device to store a second measurement result obtained in a cell reselection process before the terminal device accesses the source cell. Further, the terminal device may send the second measurement result to the source cell, so that a redirection success rate can be increased. It may be understood that the implementation may alternatively be implemented independently of the method in the second aspect or the third aspect.

With reference to the second aspect or the third aspect, in some possible implementations, the terminal device may further receive fifth indication information indicating a radio access technology and/or a frequency for which the terminal device is to send a second measurement result, so that signaling overheads between the terminal device and the source network device can be reduced.

With reference to the second aspect or the third aspect, in some possible implementations, the terminal device may further receive sixth indication information indicating the terminal device to send a second measurement result that meets a preset condition, so that signaling overheads between the terminal device and the target network device can be reduced.

According to a fourth aspect, a communication method is further provided. The method in the fourth aspect may be implemented by a network device or a component (for example, a chip or a circuit) that may be used for the network device. The method may include: The network device generates fourth indication information, and sends the fourth indication information to a terminal device, to indicate the terminal device to store a second measurement result obtained in a cell reselection process before the terminal device accesses a source cell.

With reference to the fourth aspect, in some possible implementations, the network device may further send fifth indication information to the terminal device, to indicate a radio access technology and/or a frequency for which the terminal device is to send a second measurement result.

With reference to the fourth aspect, in some possible implementations, the network device may further send sixth indication information to the terminal device, to indicate the terminal device to send a second measurement result that meets a preset condition.

According to a fifth aspect, a communication method is further provided. The method in the fifth aspect may be implemented by a third network device or a component (for example, a chip or a circuit) that may be used for the third network device. For example, the third network device implements the method. The method may include: The third network device generates a third message and sends the third message to a terminal device, to indicate the terminal device to enter an RRC idle state or an RRC inactive state. The third message includes seventh indication information indicating the terminal device to store, in an idle measurement result, a geographical location of the terminal device and/or information about a distance between the terminal device and each cell reference point, so that a network side configures CA and/or MR-DC for the terminal device, thereby improving communication performance and user experience.

According to a sixth aspect, a communication method is further provided. The method in the sixth aspect may be implemented by a terminal device or a component (for example, a chip or a circuit) that may be used for the terminal device. The method may include: receiving a third message, where the third message includes seventh indication information indicating the terminal device to store, in an idle measurement result, a geographical location of the terminal device and/or information about a distance between the terminal device and each cell reference point; performing measurement based on the third message, and storing an obtained measurement result; and sending the obtained measurement result. Optionally, the measurement result may include the idle measurement result and/or a measurement result obtained by continuing measurement in a connection establishment or resumption process. The measurement result obtained by continuing measurement in the connection establishment or resumption process also includes a geographical location of the terminal device and/or a distance between the terminal device and each cell reference point. Optionally, the measurement result may be used by a network device that receives the measurement result to configure CA and/or DC, thereby improving communication performance and user experience.

According to a seventh aspect, a communication method is further provided. The method in the seventh aspect may be implemented by a fourth network device or a component (for example, a chip or a circuit) that may be used for the fourth network device. For example, the fourth network device implements the method. The method may include: The fourth network device receives a measurement result from a terminal device. The measurement result includes an idle measurement result and/or a measurement result obtained by continuing measurement in a connection establishment or resumption process, and the measurement result includes a geographical location of the terminal device and/or a distance between the terminal device and each cell reference point. The fourth network device configures CA and/or DC for the terminal device based on the received measurement result. Therefore, communication performance and user experience can be improved.

According to an eighth aspect, a communication apparatus is provided. The communication apparatus has a function of implementing behavior or steps in any method in the first aspect to the seventh aspect. The function may be implemented by hardware, or may be implemented by hardware executing corresponding software. The hardware or the software includes one or more modules corresponding to the function.

According to a ninth aspect, a communication apparatus is provided. The communication apparatus may be a communication apparatus that implements any method in the first aspect to the seventh aspect. The communication apparatus includes a processor and a memory. The memory is configured to store a computer program, instructions, or data. The processor is coupled to the memory. When the processor reads the computer program, the instructions, or the data, the communication apparatus is enabled to perform the method in any aspect. Optionally, the communication apparatus may further include a communication interface.

For example, the communication interface may be a transceiver in the communication apparatus. The transceiver may be used by the communication apparatus to communicate with another device.

According to a tenth aspect, an embodiment of this application provides a chip system. The chip system includes a processor, configured to implement any method in the first aspect to the seventh aspect. In a possible design, the chip system further includes a memory, configured to store program instructions and/or data. The chip system may include a chip, or may include a chip and another discrete component.

According to an eleventh aspect, an embodiment of this application provides a communication system. The system includes at least one of the first network device, the second network device, the third network device, the fourth network device, and the terminal device.

According to a twelfth aspect, a computer program product is provided. The computer program product includes computer program code. When the computer program code is run, any method in the foregoing aspects is performed.

According to a thirteenth aspect, this application provides a computer-readable storage medium. The computer-readable storage medium stores a computer program. When the computer program is run, any method in the foregoing aspects is implemented.

### BRIEF DESCRIPTION OF DRAWINGS

FIG. 1a and FIG. 1b are diagrams of NTN network architectures according to an embodiment of this application;
FIG. 2 shows an application scenario according to an embodiment of this application;
FIG. 3 is a schematic flowchart of an example of a communication method according to an embodiment of this application;
FIG. 4 is a schematic flowchart of another example of a communication method according to an embodiment of this application;
FIG. 5 is a diagram of a communication apparatus according to an embodiment of this application; and
FIG. 6 is a diagram of another communication apparatus according to an embodiment of this application.

### DESCRIPTION OF EMBODIMENTS

In embodiments of this application, "at least one" means one or more, and "a plurality of" means two or more than two. The term "and/or" describes an association relationship of associated objects, and indicates that three relationships may exist. For example, A and/or B may indicate the following three cases: Only A exists, both A and B exist, and only B exists. A and B may be singular or plural. The character "/" generally indicates an "or" relationship between the associated objects. The expression "at least one of the following items (pieces)" or a similar expression means any combination of these items, including a single item (piece) or any combination of a plurality of items (pieces). For example, at least one item (piece) of a, b, or c may represent a, b, c, a and b, a and c, b and c, or a, b and c, and each of a, b, c may be an element, or may be a set including one or more elements.

In embodiments of this application, "for example", "in some embodiments", "in another embodiment", "in an implementation", or the like is used to represent an example, an illustration, or a description. Any embodiment or design scheme described as an "example" in this application should not be explained as being more preferred or having more advantages than another embodiment or design scheme. Exactly, the term "example" is used to present a concept in a specific manner.

In embodiments of this application, communicate and transmit may be used interchangeably sometimes. It should be noted that, when differentiation is not emphasized, meanings expressed by communicate and transmit are consistent. For example, transmit may include send and/or receive, and may be a noun or a verb.

It should be noted that in embodiments of this application, words such as "first" and "second" are merely used for distinguishing, and cannot be understood as an indication or implication of relative importance or an indication or implication of a sequence. In embodiments of this application, "equal to" may be used together with "greater than", which is applicable to a technical solution used in a case of "greater than"; or may be used together with "less than", which is applicable to a technical solution used in a case of "less than". It should be noted that, when used together with "greater than", "equal to" is not used together with "less than"; and when used together with "less than", "equal to" is not used together with "greater than".

The following describes some terms used in embodiments of this application.
1. Terminal device. In embodiments of this application, the terminal device is a device with a wireless transceiver function, and may be referred to as a terminal (terminal), user equipment (user equipment, UE), a mobile station (mobile station, MS), a mobile terminal (mobile terminal, MT), an access terminal device, an in-vehicle terminal device, an industrial control terminal device, a UE unit, a UE station, a mobile, a remote station, a remote terminal device, a mobile device, a UE terminal device, a wireless communication device, a UE agent, a UE apparatus, or the like. The terminal device may be fixed or mobile. It should be noted that the terminal device may support at least one wireless communication technology, for example, LTE, NR, or wideband code division multiple access (wideband code division multiple access, WCDMA). For example, the terminal device may be a mobile phone (mobile phone), a tablet computer (pad), a desktop computer, a laptop computer, an all-in-one computer, an in-vehicle terminal, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical surgery), a wireless terminal in smart grid (smart grid), a wireless terminal in transportation safety (transportation safety), a wireless terminal in smart city (smart city), a wireless terminal in smart home (smart home), a cellular phone, a cordless telephone set, a session initiation protocol (session initiation protocol, SIP) telephone, a wireless local loop (wireless local loop, WLL) station, a personal digital assistant (personal digital assistant, PDA), a handheld device having a wireless communication function, a computing device or another processing device connected to a wireless modem, a wearable device, a terminal device in a future mobile communication network, or a terminal device in a future evolved public land mobile network (public land mobile network, PLMN). In some embodiments of this application, the terminal may alternatively be an apparatus with a transceiver function, for example, a chip system. The chip system may include a chip, and may further include another discrete component.
2. Network device. In embodiments of this application, the network device is a device that provides a wireless communication function for a terminal device, and may also be referred to as an access network device, a radio access network (radio access network, RAN) device, or the like. For example, the network device includes but is not limited to a next-generation nodeB (generation nodeB, gNB) in a 5th-generation (5th-generation, 5G) mobile communication system, a home base station (for example, a home evolved nodeB or a home nodeB, HNB), a baseband unit (baseband unit, BBU), a transmitting and receiving point (transmitting and receiving point, TRP), a transmitting point (transmitting point, TP), a mobile switching center, or a non-terrestrial base station. Alternatively, the network device may be a radio controller, a central unit (centralized unit, CU), and/or a distributed unit (distributed unit, DU) in a cloud radio access network (cloud radio access network, CRAN) scenario. Alternatively, the network device may be a relay station, an access point, an in-vehicle device, a terminal device, a wearable device, a network device in future mobile communication, a network device in a future evolved PLMN, or the like. In some embodiments, the network device may alternatively be an apparatus that provides a wireless communication function for a terminal device, for example, a chip system. For example, the chip system may include a chip, and may further include another discrete component.

The CU and the DU may be physically separated or deployed together. A plurality of DUs may share one CU. One DU may be connected to a plurality of CUs. The CU and the DU may be connected through an interface, for example, an F1 interface. The CU and the DU may be obtained through division based on a protocol layer of a wireless network. For example, in a possible division manner, the CU is configured to perform functions of a radio resource control (Radio Resource Control, RRC) layer, a service data adaptation protocol (service data adaptation protocol, SDAP) layer, and a packet data convergence protocol (packet data convergence protocol, PDCP) layer, and the DU is configured to perform functions of a radio link control (radio link control, RLC) layer, a media access control (media access control, MAC) layer, a physical (physical) layer, and the like. It may be understood that, the division of processing functions of the CU and the DU based on the protocol layers is merely an example, and there may be other division. For example, the CU or the DU may have functions of more protocol layers through division. For example, the CU or the DU may alternatively have some processing functions of a protocol layer through division. In a design, some functions of the RLC layer and functions of protocol layers above the RLC layer are configured on the CU, and remaining functions of the RLC layer and functions of protocol layers below the RLC layer are configured on the DU. In another design, functions of the CU or the DU may alternatively be obtained through division based on a service type or another system requirement. For example, division is performed based on a latency, a function whose processing time needs to meet a latency requirement is configured on the DU, and a function whose processing time does not need to meet the latency requirement is configured on the CU. The network architecture may be used for a 5G communication system, and may share one or more components or resources with an LTE system. In another design, the CU may alternatively have one or more functions of a core network. One or more CUs may be disposed together or separately. For example, the CUs may be disposed on a network side for ease of centralized management. The DU may have a plurality of radio frequency functions, or the radio frequency functions may be disposed remotely.

A function of the CU may be implemented by one entity or different entities. For example, the function of the CU may be further divided. For example, a control plane (control panel, CP) and a user plane (user panel, UP) are separated as a CU control plane (CU-CP) and a CU user plane (CU-UP). For example, the CU-CP and the CU-UP may be implemented by different functional entities. The CU-CP and the CU-UP may be coupled to the DU to jointly complete a function of the access network device.

### 3. MR-DC

In MR-DC, in a plurality of base stations that communicate with a terminal device, a base station that performs control plane signaling exchange with a core network is referred to as a master node (master node, MN), and another base station is referred to as a secondary node (secondary node, SN). In addition to control plane signaling exchange, the master node may establish a data plane connection to the core network, and the secondary base station may establish a data plane connection to the core network.

A set of cells in the MN that provide a service for the terminal device may be referred to as a master cell group (master cell group, MCG). A set of cells in the SN that provide a service for the terminal device may be referred to as a secondary cell group (secondary cell group, SCG). Cells in each cell group (namely, the MCG or the SCG) jointly provide a transmission resource for the terminal device by using a carrier aggregation (carrier aggregation, CA) technology. Each cell in the MCG and the SCG may be referred to as a serving cell of the terminal device. The MCG and the SCG each include at least one cell (Cell).

In some protocols, for example, in new radio (new radio, NR), a PCell and a PSCell are collectively referred to as a special cell (special cell, SpCell). When there are a plurality of cells in the MCG or the SCG, a cell other than the SpCell may be referred to as a secondary cell (secondary cell, SCell). In some other protocols, a cell other than a PCell in the MCG and the SCG is referred to as an SCell. In this application, unless otherwise specified, the SCell represents a cell other than the SpCell in the MCG and the SCG. Carrier aggregation may be performed between the SCell and the SpCell in each cell group, to jointly provide a service for the terminal device. The following describes some terms in detail.

Primary cell (primary cell, PCell): It is a cell working on a primary component carrier. When a terminal device performs an initial connection establishment process, or starts a connection re-establishment process, or performs a handover process in the cell, the cell is indicated as a primary cell.

Primary secondary cell (primary secondary cell, PSCell): It is a cell that belongs to an SCG, and is a cell in which a terminal device initiates a random access process on a secondary node, or a cell in which a terminal device initiates data transmission without a random access process when a secondary node changes (for example, the terminal device directly performs physical uplink shared channel (physical uplink shared channel, PUSCH) transmission in a target cell), or a cell of a secondary node that initiates random access in a synchronous reconfiguration process. Secondary cell (secondary cell, SCell): It is a cell working on a secondary component carrier. When a radio resource control (radio resource control, RRC) connection is established, the secondary cell may be configured to provide an additional radio resource.

Serving cell (serving cell): If CA/DC is not configured, a terminal device in an RRC connected (CONNECTED) state has only one serving cell, that is, a PCell. If CA/DC is configured, a serving cell set includes a PCell and an SCell. Each component carrier (component carrier, CC) corresponds to an independent cell. A terminal device for which CA/DC is configured is connected to one PCell and a maximum of 31 SCells. In current application, depending on different structures of network deployment, MR-DC may include types such as EN-DC, NGEN-DC, NE-DC, and NR-DC.

In EN-DC, a master node is a long term evolution (Long Term Evolution, LTE) base station eNB that has a control plane connection to a 4G core network EPC, and a secondary node is an NR base station. In some scenarios, the NR base station in EN-DC is also referred to as a non-standalone (non-standalone, NSA) NR base station, and a terminal device cannot camp on an NR cell of the non-standalone NR base station. An NR base station that allows a terminal device to camp on is referred to as a standalone (standalone, SA) NR base station.

In NGEN-DC, a master node is an LTE base station ng-eNB that has a control plane connection to a 5G core network 5GC, and a secondary node is an NR base station.

In NE-DC, a master node is an NR base station that has a control plane connection to a 5G core network 5GC, and a secondary node is an LTE base station.

In NR-DC, a master node is an NR base station that has a control plane connection to a 5G core network 5GC, and a secondary node is an NR base station.

In addition, in non-terrestrial communication (for example, satellite communication), a network device is a high-speed moving network device. To provide high-throughput communication for UE, CA and/or MR-DC may be configured for the UE. In addition, in a non-terrestrial communication system, signal quality at an edge and a center of a cell does not differ much. The non-terrestrial communication system may also be referred to as a non-terrestrial network (non-terrestrial network, NTN) communication system. In the NTN communication system, an access network device or some functions of the access network device are deployed on a non-terrestrial device such as a high-altitude platform or a satellite, to provide seamless coverage for a terminal device. In addition, because the high-altitude platform or the satellite is located at a high altitude, a cell in the NTN communication system is referred to as an NTN cell.

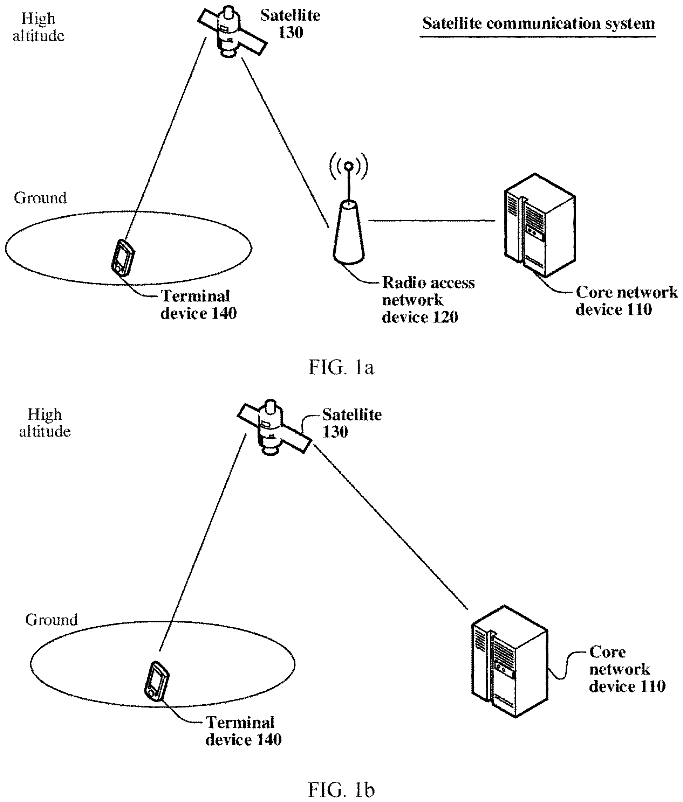

FIG. 1a and FIG. 1b are diagrams of network architectures of an NTN.

The network architecture shown in FIG. 1a includes a core network device 110, a radio access network device 120, a satellite 130, and at least one terminal device (a terminal device 140 shown in FIG. 1a). In an example, the core network device, the radio access network device, and the terminal device in FIG. 1a are located on the ground, and the satellite is located at a high altitude.

The radio access network device may communicate with the core network device in a wireless or wired manner. The core network device and the radio access network device may be different independent physical devices, or functions of the core network device and logical functions of the radio access network device may be integrated into a same physical device, or some functions of the core network device and some functions of the radio access network device may be integrated into one physical device. It should be understood that the radio access network device in embodiments of this application may correspond to different devices in different communication systems. For example, in a 5G system, the radio access network device corresponds to a 5G access network device, for example, a gNB or a ng-eNB; and in a 4G system, the radio access network device corresponds to a 4G access network device, for example, an eNB or an en-gNB.

Communication between the radio access network device and the terminal device is performed through signal forwarding by using a non-terrestrial device. That is, the non-terrestrial device may receive a signal from the radio access network device, and forward the signal to the ground to form a cell, or convert the signal received from the radio access network device into a signal of another frequency and send the signal to the ground to form a cell, thereby providing service coverage for the terminal device on the ground. Alternatively, the non-terrestrial device forwards content related to a radio protocol in a Uu interface between the radio access network device and the terminal device. In this case, the satellite is equivalent to a relay node or a transponder. Therefore, this scenario may also be referred to as a transparent forwarding (transparent) form of the satellite. Optionally, a gateway (gateway) device may further exist between the radio access network device and the non-terrestrial network device, and is responsible for forwarding related content between the radio access network device and the non-terrestrial network device (also the content related to the radio protocol in the Uu interface between the radio access network device and the terminal device).

The following uses an example in which the non-terrestrial device is a satellite to explain related content of a cell formed by using the non-terrestrial device.

In the transparent forwarding form, a satellite cell may be fixed on the ground (which may be denoted as a "fixed cell"), or may move with movement of the satellite (which may be denoted as a "moving cell"). In a "fixed cell" scenario, a satellite cell is fixed on the ground. This means that coverage of the satellite cell on the ground is fixed, which may be fixed within a period of time, or permanently fixed. For example, for a geostationary earth orbit satellite, because the satellite remains stationary relative to the ground, a satellite cell formed by the satellite is generally fixed relative to the ground. For a low-earth orbit satellite, because the satellite moves relative to the ground, the satellite may adjust a transmit angle of an antenna of the satellite or another physical parameter, so that a formed satellite cell is fixed relative to the ground.

In a "moving cell" scenario, a satellite cell moves with movement of a satellite. That is, when the satellite moves, the satellite cell on the ground moves with the satellite. Usually, a reason why the moving cell is generated is that as the satellite moves, the satellite does not dynamically adjust a beam direction. As a result, a projection of a beam generated by the satellite on the ground moves as the satellite moves.

It should be noted that an existence scenario of the moving cell is not specifically limited in embodiments of this application. When the satellite provides a service coverage area in the transparent forwarding form, a possible existence scenario of the moving cell may be as follows: The satellite establishes a connection to an original radio access network device. As the satellite moves, a cell of the original radio access network device whose signal is forwarded by the satellite moves with the satellite for a period of time. That is, the satellite maintains the connection to the original radio access network device for a period of time. At a moment, the connection between the satellite and the original radio access network device is disconnected due to a long distance, a weak signal, or other reasons, and the satellite is connected to a new radio access network device. Then, the satellite starts to forward a signal of the new radio access network device, to form a new satellite cell. It may be understood that although the satellite keeps moving, because a location of the radio access network device on the ground remains unchanged, in a scenario with a moving cell, if a satellite forwards a signal of a radio access network device on the ground, a satellite cell formed for the radio access network device moves within a specific range as the satellite runs, but the movement range of the satellite cell usually surrounds the radio access network device.

FIG. 1b is a diagram of another network architecture of a satellite communication system to which an embodiment of this application is applicable. The network architecture includes a core network device 110, a satellite 130, and at least one terminal device (a terminal device 140 shown in FIG. 1b). In an example, the core network device and the terminal device in FIG. 1b are located on the ground, and the satellite is located at a high altitude.

A difference from the network architecture shown in FIG. 1a lies in that, in the network architecture shown in FIG. 1b, a non-terrestrial network device may have a function of a radio access network device, for example, a base station, or have the radio access network device deployed. The non-terrestrial network device may generate a cell signal, and send the cell signal to the ground to form a cell, thereby providing a service coverage area for the terminal device on the ground. Therefore, this scenario may also be referred to as a regenerative (regenerative) form of the non-terrestrial network device. Optionally, a gateway device deployed on the ground may further exist between the radio access network device and the core network, and is responsible for forwarding related content between the radio access network device and the core network. It may be understood that there may be a communication interface between non-terrestrial network devices in the regenerative form, and a communication interface between two satellites in the regenerative form may use a same protocol as a communication interface between two base stations, for example, an Xn interface or an X2 interface. In addition, the non-terrestrial network device in the regenerative form may be used as a DU, and a CU may be implemented on base station or network device located on the ground. The non-terrestrial network device is connected to the base station or network device on the ground through an F1 interface. In a scenario of the regenerative form, a satellite cell may be fixed on the ground, or may move on the ground as the satellite moves.

Although FIG. 1a and FIG. 1b show only one terminal device, it should be understood that the radio access network device or satellite or core network device may provide a service for one or more terminal devices. Quantities of core network devices, radio access network devices, satellites, and terminal devices included in the satellite communication system are not limited in embodiments of this application. In addition, the terminal device may have a fixed location, or may move. This is not limited in this application.

### 4. Redirect

A network device may indicate, by using redirection information (for example, the redirection information is carried in an RRC release message), to redirect a terminal device to a target radio access technology or a target frequency. After receiving the redirection information, the terminal device enters an idle state, and accesses the target radio access technology or the target frequency (that is, accesses a cell corresponding to the target radio access technology or the target frequency) based on the received redirection information. The redirection information may include one or more of target radio access technology information and target frequency information. In some possible scenarios, due to load of a current serving cell, failure of the current serving cell to continue to carry some services (for example, the current serving cell is an NR cell, and the terminal device initiates an RRC setup request triggered by a voice service setup need, or a base station corresponding to the current serving cell receives, from a core network, a request for setting up a voice service for the terminal device, and determines that the terminal device needs to perform voice fallback to an LTE network, which may be referred to as evolved packet system (evolved packet system fallback, EPS fallback)), or other reasons, the terminal device may be indicated to access the target radio access technology or the target frequency.

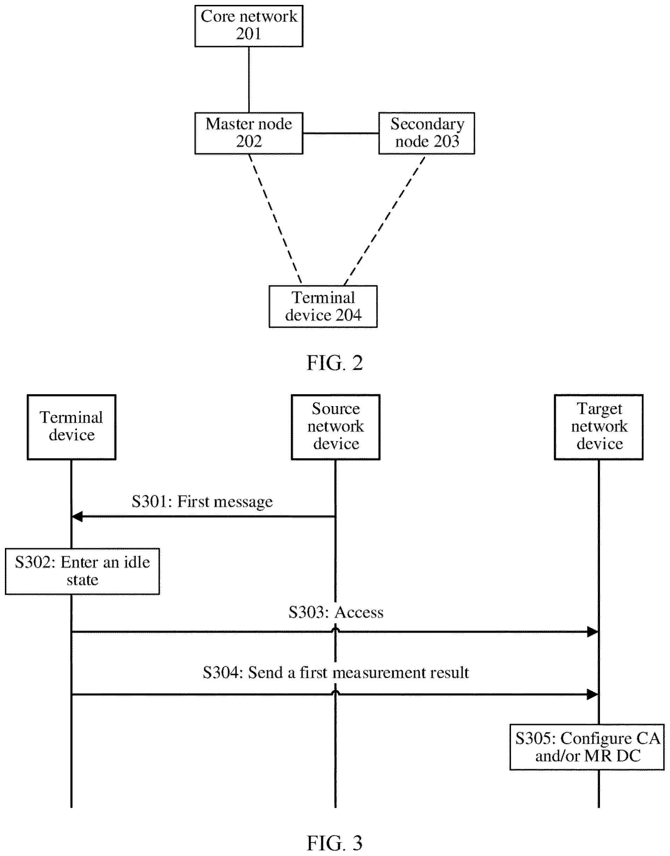

For example, FIG. 2 is a diagram of a structure of a dual connectivity communication system. A master node 202 has a control plane connection to a core network 201, and a terminal device 204 establishes a wireless connection to both the master node 202 and a secondary node 203. In addition, the master node 202 is further connected to the secondary node 203.

The master node 202 and the core network 201 may be connected through an S1 interface or an NG interface. There is at least the control plane connection between the master node 202 and the core network 201, and further, there may be a user plane connection. Interfaces between the master node 202 and the core network 201 include S1-U/NG-U and S1-C/NG-C. The S1-U/NG-U represents the user plane connection, and the S1-C/NG-C represents the control plane connection. There may be or may not be a user plane connection between the secondary node 203 and the core network 201. When there is no user plane connection between the secondary node 203 and the core network 201, data of the terminal device 204 may be split by the master node 201 to the secondary node 203 at a packet data convergence protocol (packet data convergence protocol, PDCP) layer. The master node 202 may also be referred to as a master base station or a master access network device, and the secondary node 203 may also be referred to as a secondary base station or a secondary access network device.

Both the master node 202 and the secondary node 203 are network devices.

As shown in FIG. 3, an embodiment of this application provides a communication method. The method may include the following steps.

S301: A source network device sends a first message to a terminal device, to indicate to redirect the terminal device to a cell corresponding to a target radio access technology and/or a target frequency (which may also be referred to as a first frequency).

When S301 is performed, the terminal device may be in any one of an RRC connected (connected) state, an RRC idle (idle) state, and an RRC inactive (inactive) state. A serving cell of the terminal device in the source network device may be referred to as a source cell (or may be referred to as a first cell).

The first message may include redirection information, and the redirection information indicates to redirect the terminal device to the cell corresponding to the target radio access technology and/or the target frequency. In a possible implementation, the first message may be an RRC release (RRCrelease) message. A manner in which the source network device sends the first message is not limited in this embodiment of this application. For example, the redirection information may include target frequency information, or the redirection information may include target radio access technology (RAT) information, or the redirection information may include target RAT and target frequency information. Optionally, the redirection information may not include a specific cell identifier in the specified target RAT and target frequency.

S302: The terminal device enters the idle state.

After receiving the first message, the terminal device enters the idle state.

S303: The terminal device that enters the idle state accesses the cell corresponding to the target radio access technology and/or the target frequency indicated in the redirection information.

After receiving the first message, the terminal device may access, based on the redirection information, the cell corresponding to the target radio access technology and/or the target frequency, thereby accessing a target cell (which may also be referred to as a second cell).

It may be understood that the target radio access technology and/or the target frequency indicated in the redirection information may correspond to more than one cell. The terminal device may determine, through a cell selection procedure from the cells corresponding to the target radio access technology and/or the target frequency, a target cell to camp on (that is, the terminal device performs cell selection based on the target radio access technology and/or target frequency information indicated in the redirection information, and selects a proper cell that belongs to the target radio access technology and/or the target frequency to camp on). Then, the terminal device accesses the target cell. A network device to which the target cell belongs is a target network device.

S304: The terminal device sends a first measurement result to the target network device.

The first measurement result includes a measurement result of at least one cell obtained when the terminal device camps on or accesses the source cell (that is, the first measurement result includes a measurement result of at least one cell obtained when the serving cell of the terminal device is the source cell), for example, may include a measurement result of the source cell and/or a measurement result of neighboring cell. For example, the first measurement result may be a measurement result obtained by the terminal device in the RRC connected (connected) state, the RRC idle (idle) state, or the RRC inactive (inactive) state. For example, the first measurement result may include any one or more of the following: a measurement result obtained by performing measurement by the terminal device in the RRC connected state based on a network side configuration, and a measurement result obtained by performing measurement by the terminal device in the RRC idle state or inactive state (for example, a measurement result obtained by the terminal device in a cell reselection and/or cell selection process). Further, optionally, the first measurement result may be a latest measurement result of each cell obtained by the terminal device.

It may be understood that the first measurement result may include at least one of the following: cell signal quality of each cell of the at least one cell, beam signal quality of each cell, and cell identification information of the at least one cell. For example, the first measurement result may include cell signal quality S 1 of the source cell, signal quality B 1 of a beam 1 in the source cell, and signal quality B2 of a beam 2 in the source cell. Alternatively, the first measurement result may include cell signal quality S2 of a neighboring cell of the source cell. Examples are not enumerated herein.

The cell identification information may be at least one of a cell global identifier (cell global identifier, CGI), a physical cell identifier (physical cell identifier, PCI) and a frequency, a cell identifier (cell identifier, cell ID), a non-public network identifier (non-public network identifier, NPN ID), a non-terrestrial network identifier (non-terrestrial network identifier, NTN ID), or another cell identifier of the cell.

It may be understood that the signal quality may be represented by at least one of received signal code power (received signal code power, RSCP), reference signal received power (reference signal receiving power, RSRP), reference signal received quality (reference signal receiving quality, RSRQ), a signal to noise ratio (signal noise ratio, SNR), a signal to interference plus noise ratio (signal to interference plus noise ratio, SINR), a reference signal strength indicator (reference signal strength indication, RSSI), or other signal quality. Correspondingly, representation quantities for different signal quality have corresponding quality thresholds.

In addition, the beam may be understood as a spatial resource, and may be a transmit or receive precoding vector having energy transmission directivity. In addition, the transmit or receive precoding vector can be identified by using index information, and the index information may be a correspondingly configured resource identifier (identity, ID) of the terminal. For example, the index information may be a correspondingly configured identifier or resource of a CSI-RS, may be a correspondingly configured identifier or resource of an SSB, or may be a correspondingly configured identifier or resource of an uplink sounding reference signal (Sounding Reference Signal, SRS). Optionally, the index information may alternatively be index information explicitly or implicitly carried by a signal or a channel that is carried by the beam. The energy transmission directivity may mean that the precoding vector is used to perform precoding processing on a signal to be sent, so that the signal obtained through the precoding processing has specific spatial directivity; and a received signal obtained through the precoding processing performed by using the precoding vector has good received power, for example, meets a received demodulation signal to noise ratio. The energy transmission directivity may also mean that same signals that are sent from different spatial positions and received by using the precoding vector have different received power.

In a possible implementation, the terminal device may directly send the first measurement result to the target network device.

In a possible implementation, the terminal device may send the first measurement result to the target network device based on a request from a network side. For example, the target network device may send, to the terminal device, information (which may be referred to as first information) used to request the first measurement result, and the terminal device may send the first measurement result to the target network device based on the first information. For example, the terminal device may send, to the target network device, information indicating that the terminal device stores the first measurement result; in this case, the target network device may send the first information to the terminal device, and then the terminal device sends the first measurement result to the target network device. For example, the terminal device may put, in an RRC setup complete (RRCsetupComplete) message, the information indicating that the terminal device stores the first measurement result, and send the message to the target network device. The target network device sends, to the terminal device, a UE information request (UEInformationRequest) message carrying the first information. The terminal device sends, to the target network device, a UE information response (UEInformationResponse) message carrying the first measurement result.

For example, the target network device may send, to the terminal device, an RRC resume (RRCResume) message carrying the first information, and the terminal device may send the first measurement result to the target network device by using an RRC resume complete (RRCResumeComplete) message.

Optionally, the redirection information may carry first indication information, and the first indication information is used to trigger the terminal device to send the first measurement result. The source network device may trigger, based on a requirement or an actual scenario, the terminal device to send the first measurement result, so that storage of the terminal device can be saved, and signaling overheads between the terminal device and the target network device can be reduced. For example, the source network device may determine, based on a CA/MR-DC capability of the terminal device, whether to trigger the terminal device to send the first measurement result. When the source network device determines, based on the CA or MR-DC capability of the terminal device, that the terminal device does not support CA or MR-DC between a frequency of the source cell and the target radio access technology and/or the target frequency in the first message, the source network device does not need to send the first indication information to the terminal device, and the terminal device does not need to send the first measurement result to the target network device. When the source network device determines, based on the CA or MR-DC capability of the terminal device, that the terminal device supports CA or MR-DC between the frequency of the source cell and the target radio access technology and/or the target frequency in the first message, the source network device sends the first indication information to the terminal device, and the terminal device sends the first measurement result to the target network device.

It may be understood that the first indication information may not be carried in the redirection information, but is carried in the first message. Alternatively, the source network device may send the first indication information by using another message. A manner in which the source network device sends the first indication information is not limited in this embodiment of this application.

In some possible implementations, the first indication information may indicate the terminal device to send the first measurement result to the target cell.

In some other possible implementations, the first indication information may indicate the terminal device to send an identifier of the source cell to the target cell. The target cell can learn, based on the identifier of the source cell, that signal quality of the terminal device in the source cell is good. Further, the target network device may determine, based on the CA or MR-DC capability of the terminal device, whether to configure CA and/or MR-DC between the target cell and the source cell for the terminal device. Because the first measurement result carries only the identifier of the source cell, signaling overheads between the terminal device and the target cell can be reduced.

In some other possible implementations, the first indication information may indicate the terminal device to store the first measurement result. Further, the terminal device may determine, based on a request or an indication from the network device, whether and when to send the stored first measurement result.

Optionally, the terminal device may send the first measurement result to the target network device based on the first indication information.

It may be understood that the terminal device may alternatively send the first measurement result to the target network device based on the first information and the first indication information.

In a possible implementation, the terminal device may determine whether the terminal device supports MR-DC or CA between a frequency (the first frequency) of the target cell and a frequency (a second frequency) of neighboring cell (which may be referred to as a first neighboring cell) in the first measurement result. When the terminal device determines that the terminal device supports MR-DC or CA between the first frequency and the second frequency, the terminal device sends the first measurement result. Optionally, the first measurement result may be a measurement result of the first neighboring cell. It may be understood that, the determining, by the terminal device, whether MR-DC or CA between the first frequency and the second frequency is supported may be combined with the foregoing solution of the first information and/or the first indication information. For example, after receiving the first information sent by the target network device, the terminal device determines that the terminal device supports MR-DC or CA between the first frequency and the second frequency, so that the terminal device sends the first measurement result to the target network device. For another example, when the terminal device receives the first indication information and determines that the terminal device supports MR-DC or CA between the first frequency and the second frequency, the terminal device sends the first measurement result to the target network device based on the first indication information. Examples are not enumerated herein.

Optionally, the terminal device may determine, based on an indication from a network device (which may be the source network device or the target network device), a radio access technology and/or a frequency for which a measurement result is to be sent to the target network device. For example, the network device may send second indication information to the terminal device, and the second indication information indicates that the first measurement result needs to include a measurement result of a cell of the second frequency and/or a first standard. The network device indicates, by using the second indication information, the terminal device to report a measurement result of a cell of a specified frequency or standard (for example, the network device determines, based on the CA or MR-DC capability of the terminal device, that the terminal device supports CA or MR-DC between the first frequency and the second frequency, and indicates the terminal device to send a measurement result of the second frequency), so that signaling overheads between the terminal device and the target network device can be reduced. For another example, the network device may send third indication information to the terminal device, and the third indication information indicates the terminal device to send a first measurement result that meets a preset condition or send the first measurement result when the signal quality of the at least one cell meets a preset condition. The preset condition may be, for example, that cell signal quality or beam signal quality exceeds a preset threshold. The signaling overheads between the terminal device and the target network device can also be reduced by using the third indication information. For example, the source network device may put the second indication information and the third indication information in the first message. Alternatively, the target network device may put the second indication information and the third indication information in a UE information request message that carries the first information and that is to be sent to the terminal device.

In a possible implementation, the terminal device may put the first measurement result in a second message. The second message may be, for example, an RRCsetupComplete message. Optionally, the second message may further include cell identification information of the source cell.

It should be noted that the second message may alternatively be a message that carries cell information of the source cell but does not carry the first measurement result. That is, the sending, by the terminal device, the cell information of the source cell to the target network device in a redirection scenario may not be coupled to the foregoing solution of sending the first measurement result.

S305: The target network device configures CA and/or MR-DC for the terminal device based on the first measurement result.

After receiving the first measurement result, the target network device may configure CA and/or MR-DC for the terminal device based on the first measurement result. That is, the target network device may select a proper cell based on the first measurement result, and configure the cell for the terminal device, so that the cell and the target cell are used for communication with the terminal device in a CA and/or MR-DC manner. For example, if the terminal device supports CA between the target cell and the first neighboring cell, and cell signal quality of at least one cell of the first neighboring cell is higher than the preset threshold, the target network device may configure the at least one cell of the first neighboring cell as an SCell or a PSCell in CA. Alternatively, the terminal device supports CA between the target cell and the first neighboring cell, and at least one cell of the first neighboring cell may be configured as an SCell or a PSCell in MR-DC. Alternatively, the terminal device supports CA/DC between the target cell and the first neighboring cell, a cell that is in the first neighboring cell and that belongs to a different network device from the target cell may be used to form MR-DC, and a cell that is in the first neighboring cell and that belongs to a same base station as the target cell may be used to form CA. S305 is optional.

According to the foregoing embodiment, the terminal device may report an available measurement result without extra measurement burden, so that the network side obtains the measurement result in advance. This reduces a latency between configuring, by a network side device, a measurement configuration for a terminal device after redirection and receiving a measurement result from the terminal device, so that the network side can configure proper CA and/or MR-DC for the terminal device earlier, thereby increasing a time for the terminal device to use CA and/or MR-DC. Further, the terminal device can send and receive data earlier by using a communication resource of a cell, thereby improving communication performance and user experience.

Optionally, before S301, for example, before the terminal device accesses the source cell, the terminal device may receive fourth indication information. The fourth indication information indicates the terminal device to store or report a second measurement result obtained in a cell reselection process before the terminal device accesses the source cell. The second measurement result may include at least one of the following: cell signal quality of at least one cell, beam signal quality of the at least one cell, and cell identification information of the at least one cell. Optionally, the fourth indication information may be sent to the terminal device by the source network device or another network device by using a broadcast message, or may be sent to the terminal device by a network device that previously configures the terminal device to enter the RRC idle state or the RRC inactive state. In this case, when accessing the source cell, the terminal device may send, to the source network device, the second measurement result obtained during cell reselection, so that the source network device can select a proper target radio access technology and/or target frequency when sending the redirection information to the terminal device. For example, the source network device selects, based on the second measurement result reported by the terminal device, a radio access technology and/or a frequency corresponding to a cell with good signal quality as the target radio access technology and/or the target frequency, to increase a redirection success rate. In addition, because the measurement result obtained during cell reselection is used, the terminal device does not have additional measurement burden, and processing complexity and power consumption of the terminal device are reduced. The fourth indication information may be optional. In this case, the terminal device may directly send, to the source cell, the second measurement result obtained in the cell reselection process before the terminal device accesses the source cell.

Optionally, before the terminal device accesses the source cell, the terminal device may further receive fifth indication information. The fifth indication information indicates a radio access technology and/or a frequency for which the terminal device is to send a second measurement result. For example, the network device may send fifth indication information to the terminal device, and the fifth indication information indicates that the second measurement result needs to include a measurement result of a cell of the first frequency and/or a second standard. Signaling overheads between the terminal device and the source network device can be reduced by using the fifth indication information. For another example, the network device may send sixth indication information to the terminal device, and the sixth indication information indicates the terminal device to send a measurement result that meets a preset condition or send the second measurement result when the signal quality of the at least one cell meets a preset condition. The preset condition may be, for example, that cell signal quality or beam signal quality exceeds a preset threshold. Therefore, signaling overheads between the terminal device and the source network device can be reduced.

Optionally, before the terminal device accesses the source cell, the terminal device may further receive indication information. The indication information indicates the terminal device to report the second measurement result only when the terminal device initiates an RRC setup request triggered due to a voice service setup need. In some scenarios, the source network device needs to use the second measurement result only when voice fallback is performed. Therefore, signaling overheads between the terminal device and the source network device can be reduced by using the indication information.

A specific implementation may be as follows: When camping on an NR cell, the terminal device in the RRC idle or RRC inactive state measures an evolved universal terrestrial radio access (evolved universal terrestrial radio access, E-UTRA) cell to obtain a second measurement result. After entering the connected state, the terminal device reports the second measurement result to a network device corresponding to the NR cell, to assist the network device corresponding to the NR cell in selecting a target E-UTRA frequency when performing voice service fallback to an LTE system (which may also be referred to as EPS fallback). Optionally, the terminal device may measure only an E-UTRA frequency and/or an E-UTRA cell on which cell reselection is performed when the terminal device currently camps on the NR cell, and report, to the network device corresponding to the NR cell, that the terminal device supports this type of measurement (that is, supports a capability of "for EPS fallback, measuring an E-UTRA frequency/cell in the RRC idle state or the RRC inactive state, and reporting, in the connected state, a measurement result to a network device"). Further, optionally, the terminal device obtains the E-UTRA frequency and/or cell based on broadcast information of the camped-on cell, and the network device corresponding to the NR cell does not need to perform a configuration by using dedicated signaling. In addition, the measurement result of the E-UTRA frequency and/or cell used for cell reselection is obtained from a conventional cell reselection mechanism, that is, the terminal device does not need to consume an additional measurement capability or perform additional measurement to obtain the second measurement result assisting in EPS fallback.

Optionally, the fourth indication information may be obtained in any one or more of the following manners: 1. A broadcast message sent by the network device corresponding to the NR cell indicates that reporting of a measurement result in the RRC idle state or the RRC inactive state for EPS fallback is supported. 2. A broadcast message sent by the network device corresponding to the NR cell indicates that when a voice service of the terminal device triggers the terminal device to initiate RRC connection establishment, the terminal device needs to report a second measurement result. 3. A broadcast message sent by the network device corresponding to the NR cell indicates that when the terminal device receives a paging message that is delivered by the NR base station and that indicates that a paging reason is a voice service.

It may be understood that, for a manner in which the terminal device sends the second measurement result, refer to the manner in which the terminal device sends the first measurement result. Details are not described herein again.

It may be understood that the solution of sending the fourth indication information and/or the fifth indication information and/or the sixth indication information may be implemented independently from S301 to S305. In this case, the receiving, by the terminal device, the fourth indication information and/or the fifth indication information and/or the sixth indication information from the network device and sending a measurement result may be combined with the solution shown in FIG. 3, or may be applied to another solution or scenario. This is not limited in this embodiment of this application. For example, after the terminal device receives the fourth indication information and/or the fifth indication information and/or the sixth indication information, when accessing the source cell, the terminal device may send, to the source network device, the second measurement result obtained during cell reselection. Then, the terminal device and the source network device perform corresponding content in S301 to S303.

It should be noted that the first indication information, the second indication information, the third indication information, the fourth indication information, the fifth indication information, and the sixth indication information in the foregoing embodiment may be implemented independently, or may be implemented in combination. For example, the network device may send one or more of the first indication information, the second indication information, the third indication information, the fourth indication information, the fifth indication information, and the sixth indication information. The first indication information, the second indication information, and the third indication information may be carried in a same message or may be carried in different messages for sending. The target network device may be referred to as a first network device, and the source network device may be referred to as a second network device. The first network device and the second network device may be a same network device.

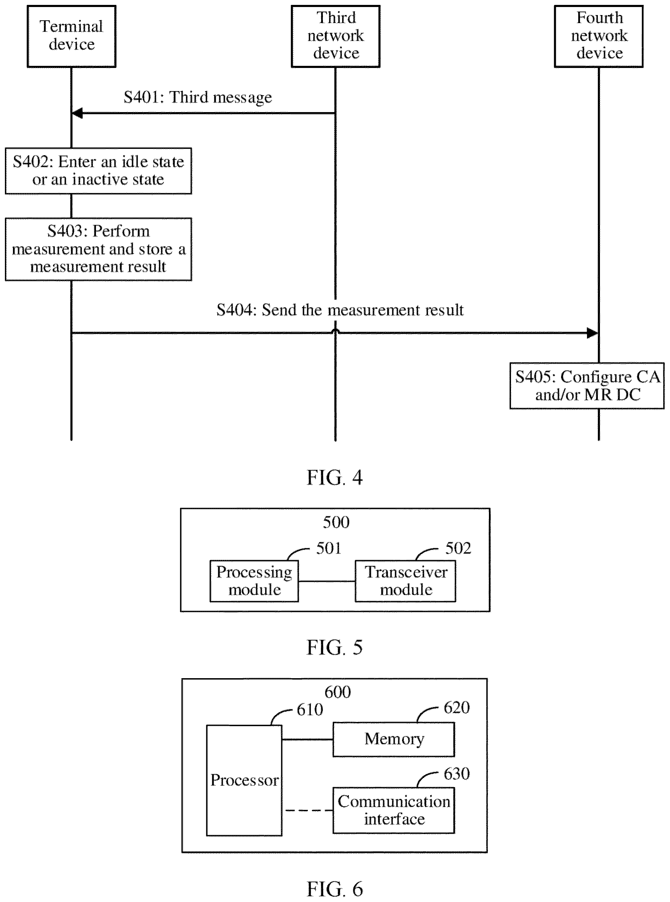

An embodiment of this application further provides a communication method. The method may be applied to an NTN communication system, and may also be applied to a non-NTN communication system. The communication method may be shown in FIG. 4, and includes the following steps.

S401: A third network device sends a third message to a terminal device, to indicate the terminal device to enter an RRC idle state or an RRC inactive state.

The third message may include information indicating the terminal device to enter the RRC idle state or the RRC inactive state. The third message may further include measurement configuration information. The measurement configuration information is configuration information indicating the terminal device to perform measurement in the RRC idle state or the RRC inactive state, for example, may include information such as a frequency and/or a cell. In this embodiment of this application, a measurement result obtained by performing measurement by the terminal device in the RRC idle state or the RRC inactive state may be referred to as an idle measurement result, and a corresponding measurement process is referred to as idle measurement.

Optionally, the third message may further include seventh indication information indicating the terminal device to store, in the idle measurement result, a geographical location of the terminal device and/or information about a distance between the terminal device and each cell reference point. For example, the seventh indication information may be included in the measurement configuration information. It may be understood that the seventh indication information and the measurement configuration information may alternatively be carried in different messages. This is not limited in this embodiment of this application.

A network side (for example, the third network device) may broadcast a cell reference point of a geographical area covered by each cell (generally a central point of the geographical area covered by the cell). The terminal device may obtain the information about the distance between the terminal device and each cell reference point based on the geographical location of the terminal device and the reference point of each cell. A manner in which the terminal device obtains the information about the distance between the terminal device and each cell reference point is not limited in this embodiment of this application.

Optionally, the third message may include a value of an effectiveness timer (for example, the timer may be referred to as T331) for idle measurement. When receiving the third message, the terminal device starts the effectiveness timer for idle measurement. Before the timer stops or expires, the terminal device performs idle measurement in the RRC idle state or the RRC inactive state. In addition, the measurement configuration information may further include effective area information of a measurement configuration. An effective area may be a set of one or more cells of one or more specified frequencies. When a camped-on cell of the terminal device is not in the effective area, the effectiveness timer may be stopped. That is, the terminal device may stop idle measurement and release the measurement configuration.

In some possible implementations, the third message may be, for example, an RRCrelease message.

S402: The terminal device enters the RRC idle state or the RRC inactive state.

After receiving the third message, the terminal device enters the RRC idle state or the RRC inactive state based on the third message, and performs S403.

S403: The terminal device performs measurement based on the measurement configuration information, and stores an obtained measurement result.

The measurement result may be referred to as a third measurement result, and the third measurement result may include at least one of the following: cell signal quality of at least one cell, beam signal quality of the at least one cell, and identification information of the at least one cell. The third measurement result includes the idle measurement result.

Optionally, the third measurement result may further include the geographical location of the terminal device and/or the information about the distance between the terminal device and each cell reference point. It may be understood that, the geographical location of the terminal device and/or the information about the distance between the terminal device and each cell reference point may alternatively be included in other information different from the third measurement result.

Optionally, the geographical location of the terminal device and/or the distance between the terminal device and each cell reference point are/is a geographical location of the terminal device and/or a distance between the terminal device and each cell reference point when the terminal device obtains signal quality of each cell.

For example, when the terminal device camps on a cell (referred to as a camped-on cell), the terminal device may perform the following action on each to-be-measured frequency in the measurement configuration information.

If the terminal device supports MR-DC or CA between a frequency of the camped-on cell and the to-be-measured frequency, the terminal device measures the to-be-measured frequency and stores a measurement result of a cell corresponding to the to-be-measured frequency. Optionally, if the measurement configuration information indicates a threshold for storing a measurement result of a cell, the terminal device stores a measurement result of a cell only when the measurement result of the cell exceeds the threshold. Optionally, if the measurement configuration information indicates that the terminal device needs to report a beam measurement result, the terminal device may further store a beam measurement result of each cell. When the terminal device stores the measurement result, a geographical location of the terminal device and/or a distance between the terminal device and each cell reference point when the terminal device obtains the measurement result of each cell may be further included. In some possible implementations, the terminal device may periodically measure each to-be-measured frequency, and store only a latest measurement result of each cell.

S404: The terminal device sends the measurement result to a fourth network device.

For example, the third measurement result includes the geographical location of the terminal device and/or the information about the distance between the terminal device and each cell reference point.

In some possible implementations, the terminal device may send the third measurement result to an accessed network device after re-accessing a network and resuming to a connected state. The accessed network device is the fourth network device.

In some other possible implementations, the terminal device may send the third measurement result to a corresponding network device when resuming a connection. The corresponding network device is the fourth network device.

The third network device and the fourth network device may be a same network device, or may be different network devices.

Optionally, when or after the terminal device re-accesses the network and resumes to the connected state and before the terminal device reports the third measurement result, or when or after the terminal device resumes the connection and before the terminal device reports the third measurement result, the terminal device may continue to measure each frequency based on the measurement configuration information, and store an obtained measurement result. The measurement result may be understood as a measurement result obtained by the terminal device by continuing measurement in an establishment or resumption process. The measurement result obtained by the terminal device by continuing measurement in the establishment or resumption process may also be stored in the third measurement result, or is stored as a fourth measurement result. In some possible implementations, the obtained fourth measurement result may replace all or a part of the third measurement result obtained by the terminal device in S403, that is, the terminal device stores only a latest measurement result of each cell. In some other possible implementations, both the third measurement result and the fourth measurement result may be stored by the terminal device, and sent to the fourth network device. It should be noted that the fourth measurement result may also include a geographical location of the terminal device and/or a distance between the terminal device and each cell reference point.

It may be understood that the measurement result sent by the terminal device to the fourth network device may be the third measurement result and/or the fourth measurement result, and may vary with different scenarios.

S405: The fourth network device configures CA and/or MR-DC for the terminal device based on the received measurement result.

Optionally, after receiving the measurement result sent by the terminal device, the fourth network device may perform corresponding processing with reference to or by using the received measurement result. One possible processing may be configuring CA and/or MR-DC for the terminal device.

In this embodiment, the idle measurement result and/or the measurement result obtained by continuing measurement in the connection establishment or resumption process that are/is sent by the terminal device include the geographical location of the terminal device and/or the distance between the terminal device and each cell reference point, so that the network side selects a proper SCell/PSCell for the terminal device to configure CA and/or MR-DC (for example, the network side may learn, based on a movement direction of a non-terrestrial network device, location information of the terminal device and/or the distance between the terminal device and each cell reference point, and a coverage area of each cell, a time within which each cell can continue to cover the terminal device, and the network side may select a cell that continues to cover the terminal device for a longest time and whose signal quality meets a specific threshold as a proper SCell/PSCell). This can avoid signaling overheads and a delay that are caused by an improper cell selected by the network side for the terminal device, thereby improving communication performance and user experience.

In some possible implementations, if the network device (the source network device, the target network device, the third network device, or the fourth network device) in the foregoing embodiments is a CU, the method in embodiments of this application further includes: The CU sends a part or all of the received information to a DU.

It may be understood that, in the solution of the embodiment shown in FIG. 3, the first measurement result may also carry a geographical location of the terminal device and/or information about a distance between the terminal device and each cell reference point. For how the terminal device obtains the geographical location of the terminal device and/or the information about the distance between the terminal device and each cell reference point, refer to related descriptions in the foregoing embodiment. Details are not described herein again.

Optionally, all or some of the steps in the embodiment shown in FIG. 4 may be combined with the embodiment shown in FIG. 3. For example, the first measurement result in the embodiment shown in FIG. 3 may carry the geographical location of the terminal device and/or the information about the distance between the terminal device and each cell reference point. In some possible implementations, the first measurement result may be a measurement result obtained in the manner of S401 to S403. That is, in S304, the first measurement result sent by the terminal device to the target network device may be a measurement result obtained by the terminal device in the source cell by performing S401 to S403.

It may be understood that in embodiments of this application, a terminal device and/or a network device may perform some or all of steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be necessarily performed.

With reference to accompanying drawings, the following describes apparatuses configured to implement the foregoing methods in embodiments of this application. Therefore, all the foregoing content may be used in the following embodiments. Repeated content is not described again. To implement functions in the methods provided in embodiments of this application, each network element or apparatus may include a hardware structure and/or a software module, and the functions are implemented in a form of the hardware structure, the software module, or a combination of the hardware structure and the software module.

FIG. 5 is a block diagram of a communication apparatus 500 according to an embodiment of this application. The communication apparatus 500 may correspondingly implement a function or a step implemented by the network device (for example, any one of the first network device to the fourth network device) or the terminal device in the method embodiments shown in FIG. 3 and FIG. 4. In a possible implementation, the communication apparatus 500 may be the terminal device or a component (for example, a chip or a circuit) that may be used for the terminal device. In another possible implementation, the communication apparatus 500 may be the network device or a component (for example, a chip or a circuit) that may be used for the network device. Alternatively, the communication apparatus 500 may be a chip system. In this embodiment of this application, the chip system may include a chip, or may include a chip and another discrete component.

As shown in FIG. 5, the communication apparatus 500 includes a transceiver module 501 and a processing module 502. Optionally, the communication apparatus may further include a storage module. The storage module may be configured to store one or more of data, information, and instructions.

In some examples, when the communication apparatus 500 is configured to implement a function of the target network device (the first network device),
the transceiver module 501 is configured to receive a first measurement result from a terminal device, and the processing module 502 is configured to configure CA and/or MR-DC for the terminal device based on the first measurement result.

In some examples, when the communication apparatus 500 is configured to implement a function of the source network device (the second network device),
the processing module 502 is configured to generate a first message, to indicate a to redirect terminal device to a cell of a first frequency, and trigger the terminal device to send a first measurement result, and the transceiver module 501 is configured to send the first message to the terminal device.

In some examples, the processing module 502 of the communication apparatus 500 may be configured to generate fourth indication information, and the transceiver module 501 may be configured to send, to the terminal device, at least one of the fourth indication information, fifth indication information, and sixth indication information.

In some examples, when the communication apparatus 500 is configured to implement a function of the third network device,
the processing module 502 may be configured to generate a third message, and the transceiver module 501 may be configured to send the third message to a terminal device.

In some examples, when the communication apparatus 500 is configured to implement a function of the fourth network device,
the transceiver module 501 may be configured to receive an idle measurement result from a terminal device, and the processing module 502 may be configured to configure CA and/or MR-DC for the terminal device based on the idle measurement result.

In some examples, when the communication apparatus 500 is configured to implement a function of the terminal device,
the processing module 502 may be configured to generate a first measurement result, and the transceiver module may be configured to send the first measurement result to a target network device. Optionally, the transceiver module 501 may be further configured to receive a first message from a source network device. Optionally, the transceiver module 501 may be further configured to receive one or more of first indication information, second indication information, third indication information, and fourth indication information. Optionally, the storage module may be configured to store the first measurement result.

In some examples, when the communication apparatus is configured to implement a function of the terminal device,
the transceiver module 501 may be configured to receive a third message from a third network device, and the processing module 502 may be configured to perform measurement based on measurement configuration information, and store an obtained third measurement result. Optionally, the third measurement result may include a geographical location of the terminal device and/or information about a distance between the terminal device and each cell reference point. Optionally, the transceiver module 501 may be further configured to send the third measurement result. Optionally, the transceiver module 501 may be further configured to receive seventh indication information. Optionally, the storage module may be configured to store the third measurement result.

It may be understood that, for coupling between the modules of the communication apparatus 500 and specific implementations, refer to descriptions in the method embodiments. Details are not described herein again.

It should be understood that the processing module 502 in this embodiment of this application may be implemented by at least one processor or a processor-related circuit component, and the transceiver module 501 may be implemented by a transceiver, a transceiver-related circuit component, or a communication interface. The storage module may be implemented by using at least one memory. In addition, the modules may be separated or integrated. This is not limited in this embodiment of this application.

As shown in FIG. 6, an embodiment of this application further provides a communication apparatus 600, which may be configured to implement or support the communication apparatus 600 in implementing functions of the network device or the terminal device in the methods provided in embodiments of this application. The communication apparatus 600 includes at least one processor 610 and at least one memory 620 configured to store program instructions and/or data and/or information. The memory 620 is coupled to the processor 610. The coupling in this embodiment of this application may be an indirect coupling or a communication connection between apparatuses, units, or modules in an electrical form, a mechanical form, or another form, and is used for information exchange between the apparatuses, the units, or the modules. The processor 610 may perform an operation in cooperation with the memory 620. The processor 610 may read the program instructions and/or the data and/or the information stored in the memory 620, to enable the communication apparatus 600 to implement a corresponding method. Optionally, at least one of the at least one memory may be included in the processor.

The communication apparatus 600 may further include a communication interface 630, configured to communicate with another device by using a transmission medium, so that an apparatus used in the communication apparatus 600 may communicate with the another device.

A specific connection medium between the communication interface 630, the processor 610, and the memory 620 is not limited in this embodiment of this application. For example, in this embodiment of this application, the memory 620, the processor 610, and the communication interface 630 are connected by using a bus in FIG. 6, which is merely an example for description, and imposes no limitation. The bus may be classified into an address bus, a data bus, a control bus, and the like.

In this embodiment of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

In this embodiment of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of an instruction or a data structure and that can be accessed by a computer, but is not limited thereto. The memory in this embodiment of this application may alternatively be a circuit or any other apparatus that can implement a storage function, and is configured to store the program instructions and/or the data.

An embodiment of this application further provides a communication system, configured to implement all or some of steps of the method embodiments. For example, the communication system may include one or more of the first network device, the second network device, the third network device, the fourth network device, and the terminal device.

An embodiment of this application further provides a computer-readable storage medium, including instructions. When the instructions are run on a computer, the method performed by the terminal device in the embodiments shown in FIG. 3 and FIG. 4 is performed.

An embodiment of this application further provides a computer-readable storage medium, including instructions. When the instructions are run on a computer, the method performed by the network device in the embodiments shown in FIG. 3 and FIG. 4 is performed. The network device herein may be one of the first network device, the second network device, the third network device, and the fourth network device.

An embodiment of this application further provides a computer program product, including instructions. When the instructions are run on a computer, the method performed by the network device or the terminal device in the embodiments shown in FIG. 3 and FIG. 4 is performed.

Division of the modules in embodiments of this application is an example, and is merely division of logical functions. In actual implementation, another division manner may be used. In addition, functional modules in embodiments of this application may be integrated into one processor, or may exist alone physically, or two or more modules may be integrated into one module. The integrated module may be implemented in a form of hardware or a software functional module. The module may also be referred to as a unit.

All or some of the methods in embodiments of this application may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, all or some of the procedures or functions according to embodiments of the present invention are generated. The computer may be a general-purpose computer, a special-purpose computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk drive, or a magnetic tape), an optical medium (for example, a digital video disc (digital video disc, DVD for short)), a semiconductor medium (for example, an SSD), or the like.

It is clear that a person skilled in the art can make various modifications and variations to this application without departing from the scope of this application. This application is intended to cover these modifications and variations of this application provided that they fall within the scope of the claims of this application and their equivalent technologies.

## Claims

1. A communication method, applied to a first network device, comprising:
receiving a first measurement result from a terminal device, wherein the first measurement result comprises a measurement result of at least one cell obtained by the terminal device in a first cell, the first cell is a serving cell in which the terminal device is located when the terminal device receives redirection information, and the first network device is a network device to which a second cell accessed by the terminal device after the terminal device receives the redirection information belongs; and
configuring carrier aggregation CA and/or dual connectivity DC for the terminal device based on the first measurement result.

2. The method according to claim 1, wherein the measurement result of the at least one cell comprises signal quality of the first cell, and the signal quality of the first cell comprises cell signal quality and/or beam signal quality of the first cell.

3. The method according to claim 2, wherein the measurement result of the at least one cell further comprises signal quality of a neighboring cell of the first cell, and the signal quality of the neighboring cell comprises cell signal quality and/or beam signal quality of the neighboring cell.

4. The method according to any one of claims 1 to 3, wherein the configuring CA and/or DC for the terminal device based on the first measurement result comprises: configuring a first neighboring cell of the second cell as a secondary cell, wherein the first measurement result comprises a measurement result of the first neighboring cell, and the terminal device supports CA and/or DC between the second cell and the first neighboring cell.

5. The method according to any one of claims 1 to 4, wherein the first measurement result is a measurement result obtained by the terminal device in a cell reselection process and/or a cell selection process.

6. A communication method, applied to a second network device, comprising:
generating a first message, wherein the first message comprises redirection information indicating to redirect a terminal device to a cell of a first frequency, the redirection information comprises first indication information used to trigger the terminal device to send a first measurement result, the first measurement result comprises a measurement result of at least one cell obtained by the terminal device in a first cell, and the first cell is a serving cell in which the terminal device is located when the terminal device receives the redirection information; and
sending the first message to the terminal device.

7. The method according to claim 6, wherein the first indication information indicates the terminal device to send the first measurement result to a cell that is to be accessed by the terminal device based on the redirection information, or the first indication information indicates the terminal device to send an identifier of the first cell to the cell that is to be accessed by the terminal device based on the redirection information, or the first indication information indicates the terminal device to store the first measurement result, wherein the cell that is to be accessed based on the redirection information belongs to the cell of the first frequency.

8. The method according to claim 6 or 7, wherein the first message further comprises second indication information, and the second indication information indicates that the first measurement result needs to comprise a measurement result of a cell of a second frequency and/or a first standard.

9. The method according to any one of claims 6 to 8, wherein the first measurement result is a measurement result obtained by the terminal device in a cell reselection process.

10. A communication method, comprising:
generating a first measurement result, wherein the first measurement result comprises a measurement result of at least one cell obtained by a terminal device in a first cell, and the first cell is a serving cell in which the terminal device is located when the terminal device receives redirection information; and
sending the first measurement result to a first network device, wherein the first network device is a network device to which a second cell accessed by the terminal device after the terminal device receives the redirection information belongs, and the first cell belongs to a second network device.

11. The method according to claim 10, wherein before the sending the first measurement result to a first network device, the method further comprises:
receiving a first message from the second network device, wherein the first message indicates to redirect the terminal device to a cell of a first frequency, and the first message comprises the redirection information, wherein
a frequency of the second cell is the first frequency.

12. The method according to claim 11, wherein the first message comprises first indication information used to trigger the terminal device to send the first measurement result.

13. The method according to claim 12, wherein the first indication information indicates the terminal device to send the first measurement result to a cell that is to be accessed by the terminal device based on the redirection information, or the first indication information indicates the terminal device to send an identifier of the first cell to the cell that is to be accessed by the terminal device based on the redirection information, or the first indication information indicates the terminal device to store the first measurement result, wherein the cell that is to be accessed based on the redirection information belongs to the cell of the first frequency.

14. The method according to claim 12 or 13, wherein the first message further comprises second indication information, and the second indication information indicates that the first measurement result needs to comprise a measurement result of a cell of a second frequency and/or a first standard.

15. The method according to any one of claims 10 to 14, wherein the first measurement result is a measurement result obtained by the terminal device in a cell reselection process.

16. The method according to claim 11, wherein the sending the first measurement result to a first network device comprises:
determining that the terminal device supports dual connectivity or carrier aggregation between the first frequency and a frequency of a first neighboring cell of the second cell in the first measurement result; and
sending a measurement result of the first neighboring cell to the first network device.

17. The method according to claims 10 to 16, wherein the first measurement result is used by the first network device to configure carrier aggregation CA and/or dual connectivity DC for the terminal device.

18. A communication apparatus, wherein the apparatus comprises at least one module configured to implement the method according to any one of claims 1 to 5.

19. A communication apparatus, wherein the apparatus comprises at least one module configured to implement the method according to any one of claims 6 to 9.

20. A communication apparatus, wherein the apparatus comprises at least one module configured to implement the method according to any one of claims 10 to 16.

21. A computer-readable storage medium, wherein the computer-readable storage medium stores instructions, and when the instructions are run, the method according to any one of claims 1 to 17 is performed.

22. A communication system, comprising the communication apparatus according to any one of claims 18 to 20.

23. A computer program product, comprising computer program code, wherein when the computer program code is run, the method according to any one of claims 1 to 17 is performed.
